# EUROPÄISCHE PATENTSCHRIFT

(11) **EP 1 728 989 B1**
(45) Veröffentlichungstag und Bekanntmachung des Hinweises auf die Patenterteilung: **28.05.2008**
(21) Anmeldenummer: 05011755.5
(22) Anmeldetag: 31.05.2005
(51) Int. Cl.: F02B 37/013, F02B 37/18, F02B 37/22, F02B 37/24, F01N 3/20

(54) **Mehrstufige Turboladeranordnung**
Multistage turbocharger arrangement
Arrangement des turbocompresseurs à gaz d'échappement à plusieurs étages

(43) Veröffentlichungstag der Anmeldung: 06.12.2006
(73) Patentinhaber: BorgWarner Inc., Auburn Hills, MI 48326-2872 (US)
(72) Erfinder: Kuzi, Hildwin, 62914 Eppelheim (DE); Krauss, Stefan, 67827 Becherbach (DE)
(74) Vertreter: Schmitz, Hans-Werner

(56) Entgegenhaltungen:
- EP-A- 1 306 534
- EP-A- 1 396 619
- WO-A-20/04097195
- PATENT ABSTRACTS OF JAPAN Bd. 011, Nr. 028 (M-557), 27. Januar 1987 (1987-01-27) & JP 61 201828 A (NISSAN MOTOR CO LTD), 6. September 1986 (1986-09-06)
- PATENT ABSTRACTS OF JAPAN Bd. 013, Nr. 148 (M-812), 11. April 1989 (1989-04-11) & JP 63 309726 A (YANMAR DIESEL ENGINE CO LTD), 16. Dezember 1988 (1988-12-16)

## Beschreibung

Die Erfindung betrifft eine mehrstufige Turboladeranordnung für Verbrennungskraftmaschinen, insbesondere Otto-Motoren, gemass dem Oberbegriff des Anspruches 1. Eine derartige Anordnung ist aus der EP-A-1 306 534 bekannt.

Bei einer zwei- oder mehrstufigen Aufladung von Motoren sind zumindest zwei bzw. mehrere Turbolader so in Betrieb, dass bei kleinen Gasdurchsätzen die kleinste Stufe benutzt wird und bei größeren Durchsätzen auf die größere bzw. auch auf beide (bei mehrstufigen Anordnungen auch auf mehrere) Turbolader geschaltet werden kann. Diese zwei- und mehrstufigen Anordnungen haben jedoch den Nachteil, dass nachgeschaltete Katalysatoren zur Abgasnachbehandlung nur schwer die Temperaturen erreichen, die zu ihrem Betrieb notwendig sind.

Da das Anspringen der Katalysatoren temperaturabhängig ist, wird es daher erst erfolgen, nachdem das Abgas auch die davor liegenden Turbinengehäuse entsprechend erwärmt hat. Dies macht eine Abgasnachbehandlung sehr schwierig. Insbesondere bei normalen Abgastests werden nur sehr geringe Motorlasten genutzt und daher wird eine ausreichend schnelle Erwärmung, insbesondere des Vorkatalysators, durch die großen Massen der vorgelagerten Turbinen stark behindert.

Es ist daher Aufgabe der vorliegenden Erfindung, eine mehrstufige Turboladeranordnung, insbesondere für Otto-Motoren, der im Oberbegriff des Anspruches 1 angegebenen Art zu schaffen, die eine Verbesserung der Abgasnachbehandlung möglich macht.

Die Lösung dieser Aufgabe erfolgt durch die Merkmale des Anspruchs 1.

Da sich der Vorkatalysator erfindungsgemäß vor der Niederdruckstufe befindet, wird er entsprechend der Betriebsart der erfindungsgemäßen Turboladeranordnung bei geringen Gasdurchsätzen durchströmt. Damit ist eine schnelle Aufheizung entsprechend heutiger einstufiger Systeme möglich.

Bei steigenden Gasdurchsätzen wird der Hauptkatalysator, der hinter (oder gegebenenfalls auch vor) der Niederdruckstufe liegt, durch die größere und dann auch ausreichend heiße Gasmenge sofort auf Betriebstemperatur gebracht, und dadurch die Abgasnachbehandlung gewährleistet.

Somit ergibt sich der Vorteil einer deutlich verbesserten Abgasnachbehandlung, wobei der Vorkatalysator, der gegenüber dem Hauptkatalysator normalerweise kleiner ausgelegt ist, nur von kleinen, relativ kühlen Gasmengen durchströmt wird, während die heißen Gase ihn umströmen. Dadurch wird die Gefahr einer thermischen Schädigung oder einer Vergiftung wesentlich verringert.

Weiterhin ist vorteilhaft, dass bei hohen Gasdurchsätzen und damit hohen Motorleistungen der Abgasgegendruck gegenüber anderen Systemen verringert werden kann, weil nur der große Hauptkatalysator vom Abgas beaufschlagt wird. Dadurch kann der Gegendruck sogar unter den Gegendruck zweistufiger Systeme mit nachgeschaltetem Vor- und Hauptkatalysator abgesenkt werden.

Die Unteransprüche haben vorteilhafte Weiterbildungen der Erfindung zum Inhalt.

Bei einer besonders bevorzugten Ausführungsform der erfindungsgemäßen Turboladeranordnung ist die Hochdruckstufe (Hochdruckturbolader) mit einer Umgehungsleitung für die zugeordnete Hochdruckturbine versehen. Obwohl diese Umgehungsleitung (mit zugeordnetem Steuerventil) für den Hochlauf des Turboladersystems nicht erforderlich ist, ist sie jedoch von Vorteil, wenn der Motor im unteren Saugmotorbereich betrieben wird. Dann sind die Abgasmengen so gering, dass das Umgehen der Hochdruckturbine zu einer konstanteren Temperatur im Vorkatalysator führt. Vorteilhafterweise kann zum Öffnen des Steuerventils eine durch Saugrohrunterdruck betätigte Steuerdose benutzt werden.

Bei dieser Ausführungsform ergibt sich ferner der Vorteil, dass insbesondere im unteren Teillastbereich ein geringstmöglicher Abgasgegendruck bei gleichzeitig hoher zur Verfügung stehender Leistungsreserve erreichbar ist.

Weitere Einzelheiten, Vorteile und Merkmale der Erfindung ergeben sich aus nachfolgender Beschreibung zweier Ausführungsbeispiele anhand der beigefügten Zeichnung. Es zeigt:
- Fig. 1: eine schematisch stark vereinfachte Prinzipdarstellung einer Turboladeranordnung, und
- Fig. 2: eine der Fig. 1 entsprechende Darstellung einer erfindungsgemassen Ausführungsform, und
- Fig. 3: ein Diagramm zur Verdeutlichung der Betriebsbereiche für das Schaltschema der erfindungsgemäßen Anordnung.

Die in beiden Ausführungsformen übereinstimmenden Bauteile werden nachfolgend mit den gleichen Bezugsziffern gekennzeichnet, so dass die Beschreibung der ersten Ausführungsform hinsichtlich der Übereinstimmung mit der zweiten Ausführungsform auch für diese gilt.

Dementsprechend weist eine mehrstufige Turboladeranordnung, die für Verbrennungskraftmaschinen, insbesondere Otto-Motoren, verwendbar ist, einen Hochdruckturbolader 1 auf, der nach einem Auslasssammler des Motors 8 vorgesehen ist. Der Hochdruckturbolader 1 weist eine Hochdruckturbine 9 und einen Hochdruckkompressor 10 mit Bypassleitung und Steuerventil 11 auf, und kann in üblicher Art und Weise ausgebildet sein.

Der Hochdruckturbolader 1, der eine sogenannte Hochdruckstufe bildet, ist in einer Zuleitung 18 angeordnet, wobei die Abgas-Strömungsrichtung durch die Pfeile P_{A} symbolisiert ist.

Vom Abgassammler des Motors 8 führt eine weitere Zuleitung 17 zu einer Niederdruckstufe, die einen Niederdruckturbolader 2 aufweist. Dieser kann ebenfalls wie ein üblicher Turbolader aufgebaut sein und weist dementsprechend eine Niederdruckturbine 13 auf, die über einen Läufer mit einem Niederdruckkompressor 14 verbunden ist. Die Niederdruckturbine 13 weist eine sogenannte Waste-Gate-Anordnung 3 auf, die eine Bypassleitung 16 und ein in dieser angeordnetes Steuerventil 15 umfasst.

Die Verdichterseite der Turboladeranordnung ist an einer verdichterseitigen Zuleitung 20 vorgesehen und umfasst ferner einen Ladeluftkühler 12, welcher jedoch nicht unbedingt vorgesehen sein muss. Die Strömungsrichtung der Ladeluft ist durch den Pfeil P_{L} symbolisiert.

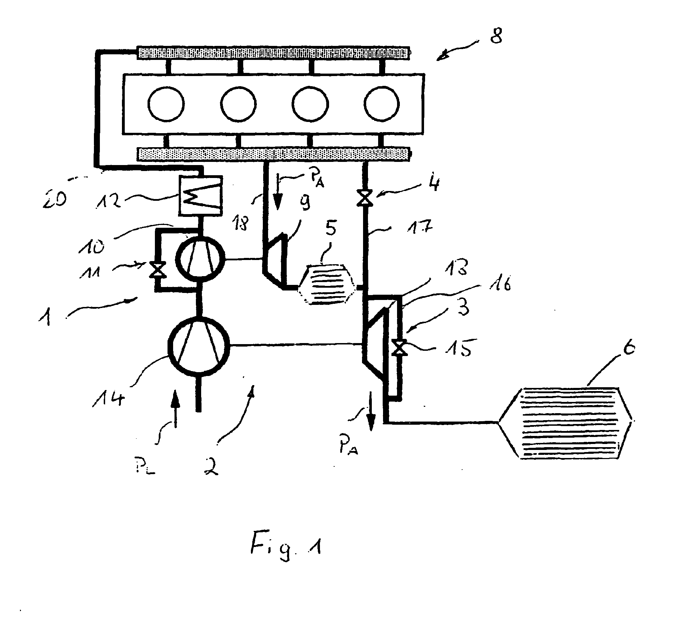

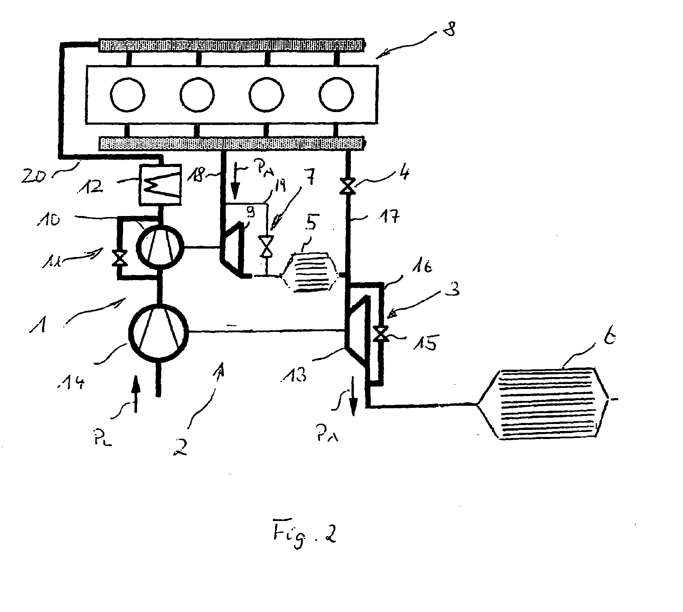

Die Ausführungsformen gemäß den Fig. 1 und 2 weisen beide einen Vorkatalysator 5 auf, der unmittelbar hinter der Turbine 9 der Hochdruckstufe und damit vor der Turbine 13 der Niederdruckstufe angeordnet ist. Vom Prinzip her wäre eine Anordnung dieses Vorkatalysators 5 vor der Hochdruckturbine 9 des Hochdruckturboladers 1 denkbar.

Nach der Niederdruckstufe bzw. der Niederdruckturbine 13 ist ferner ein Hauptkatalysator 6 vorgesehen, wie sich dies aus den Fig. 1 und 2 im Einzelnen ergibt.

Die erfindungsgemässe Ausführungsform der Fig. 2 unterscheidet sich von derjenigen der Fig. 1 nur dadurch, dass die Hochdruckturbine 9 über eine Bypassleitung 19 mit einem Steuerventil 7 umgangen werden kann. Die Bypassleitung zweigt hierbei von der Zuleitung 18 vor der Hochdruckturbine 9 ab und wird in diese Leitung 18 vor dem Vorkatalysator 5 wieder eingeleitet. Dies ergibt sich im Einzelnen aus der Darstellung der Fig. 2.

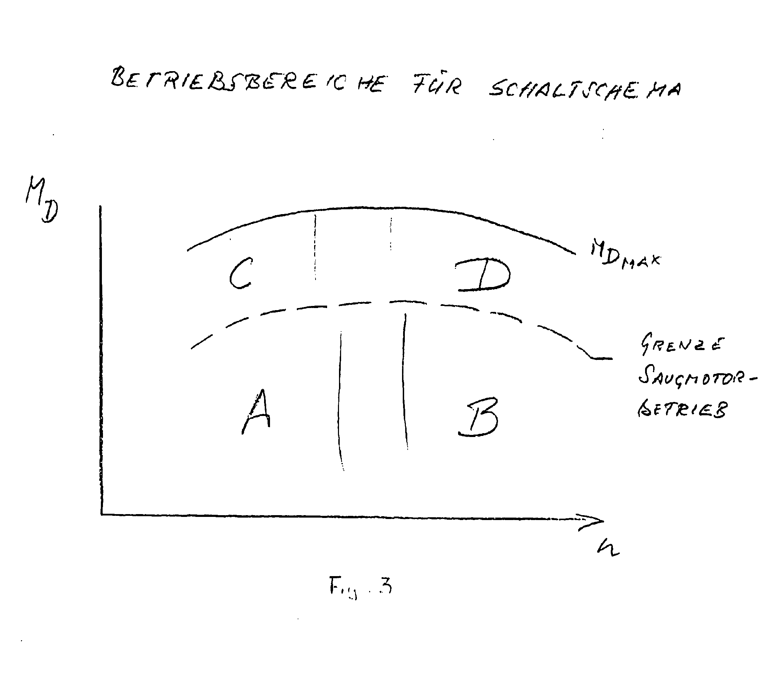

Fig. 3 zeigt die Betriebsbereiche für das in der nachfolgenden Tabelle erläuterte Schaltschema bei mehrstufiger Aufladung.

**Schaltschema für Anordnung mehrstufige Aufladung**

| **Anordnung nach Skizze 1** | **A** | **B** | **C** | **D** |
|---|---|---|---|---|
| 1 Hochdruckturbine | nahezu Leerlauf | Teillast | Vollast | durchströmt |
| 2 Niederdruckturbine | durchströmt | durchströmt | durchströmt | Vollast |
| 3 Waste Gate der Niederdruckturbine | geschlossen | geschlossen | geschlossen | offen |
| 4 Steuerventil in der Zuleitung der Niederdruckturbine | geschlossen | geschlossen | geschlossen | offen |
| 5 Vorkatalysator | durchströmt | durchströmt | durchströmt | durchströmt |
| 6 Haupkatalysator | durchströmt | durchströmt | durchströmt | durchströmt |
| 7 Steuerventil in der Umgehungsleitung der Hochdruckturbine | nicht vorhanden | | | |
| | | | | |

| **Anordnung nach Skizze 2** | **A** | **B** | **C** | **D** |
|---|---|---|---|---|
| 1 Hochdruckturbine | nahezu Leerlauf | Teillast | Vollast | nahezu umgangen |
| 2 Niederdruckturbine | durchströmt | durchströmt | durchströmt | Vollast |
| 3 Waste Gate der Niederdruckturbine | geschlossen | gesehlossen | geschlossen | offen |
| 4 Steuerventil in der Zuleitung der Niederdruckturbine | geschlossen | geschlossen | geschlossen | offen |
| 5 Vorkatalysator | durchströmt | durchströmt | durchströmt | nahezu umgangen |
| 6 Haupkatalysator | durchströmt | durchströmt | durchströmt | durchströmt |
| 7 Steuerventil in der Umgehungsleitung der Hochdruckturbine | nicht vorhanden | | | |
| | | | | |

| **Anordnung nach Skizze 3** | **A** | **B** | **C** | **D** |
|---|---|---|---|---|
| 1 Hochdruckturbine | nahezu Leerlauf | nahezu Leerlauf | Vollast | nahezu umgangen |
| 2 Niederdruckturbine | durchströmt | durchströmt | durchströmt | Vollast |
| 3 Waste Gate der Niederdruckturbine | geschlossen | geschlossen | geschlossen | offen |
| 4 Steuerventil in der Zuleitung der Niederdruckturbine | geschlossen | offen | geschlossen | offen |
| 5 Vorkatalysator | durchströmt | teilweise durchströmt | durchströmt | nahezu umgangen |
| 6 Haupkatalysator | durchströmt | durchströmt | durchströmt | durchströmt |
| 7 Steuerventil in der Umgehungsleitung der Hochdruckturbine | offen | offen | geschlossen | geschlossen |

### Bezugszeichenliste

- 1: Hochdruckturbolader
- 2: Niederdruckturbolader
- 3: Waste-Gate-Anordnung der Niederdruckturbine 13
- 4: Steuerventil in der Zuleitung der Niederdruckturbine 13
- 5: Vorkatalysator
- 6: Hauptkatalysator
- 7: Steuerventil in der Umgehungsleitung der Hochdruckturbine
- 8: Verbrennungsmotor (Otto-Motor)
- 9: Hochdruckturbine
- 10: Hochdruckkompressor
- 11: Bypassleitung mit Steuerventil
- 12: Ladeluftkühler
- 13: Niederdruckturbine
- 14: Niederdruckkompressor
- 15: Steuerventil in der Waste-Gate-Anordnung 3
- 16: Bypassleitung der Waste-Gate-Anordnung 3
- 17: Zuleitung zur Niederdruckturbine
- 18: Zuleitung zur Hochdruckturbine
- 19: Bypassleitung der Hochdruckturbine
- 20: Verdichterseitige Zuleitung zum Motor 8 für die Ladeluft
- P_{A}: Strömungsrichtung der Abgase
- P_{L}: Strömungsrichtung der Ladeluft

## Patentansprüche

1. Mehrstufige Turboladeranordnung, insbesondere für Otto-Motoren (8),
- mit einem Hochdruckturbolader (1);
- mit einem Niederdruckturbolader (2);
- mit einem Vorkatalysator (5) der in Abgas-Strömungsrichtung (P_{A}) gesehen, vor der Niederdruckturbine (13) des Niederdruckturboladers (2) angeordnet ist; und
- mit einem Hauptkatalysator (6), der dem Vorkatalysator (5) nachgeschaltet ist,
- wobei die in einer mit einem Steuerventil (4) versehenen Zuleitung (17) angeordnete Niederdruckturbine (13) des Niederdruckturboladers (2) eine Waste-Gate-Anordnung (3) mit einer Bypassleitung (16) und einem darin angeordneten Steuerventil (15) aufweist,
**dadurch gekennzeichnet,**
**dass** die in einer Zuleitung (18) angeordnete Hochdruckturbine (9) des Hochdruckturboladers (1) eine Bypassleitung (19) und ein darin angeordnetes Steuerventil (7) aufweist, wobei die Bypassleitung (19) vor der Hochdruckturbine (9) von der Zuleitung (18) abzweigt und vor dem Vorkatalysator (5) wieder in die Zuleitung (18) einmündet.

2. Turboladeranordnung nach Anspruch 1, **dadurch gekennzeichnet, dass** der Vorkatalysator (5), in Abgas-Strömungsrichtung (P_{A}) gesehen, direkt hinter der Hochdruckturbine (9) des Hochdruckturboladers (1) angeordnet ist.

3. Turboladeranordnung nach einem der Ansprüche 1 oder 2, **dadurch gekennzeichnet, dass** der Hauptkatalysator (6) hinter der Niederdruckturbine (13) des Niederdruckturboladers (2) angeordnet ist.

4. Turboladeranordnung nach einem der Ansprüche 1 bis 2, **dadurch gekennzeichnet, dass** der Hauptkatalysator (6) vor der Niederdruckturbine (13) des Niederdruckturboladers (2) angeordnet ist.

5. Turboladeranordnung nach einem der Ansprüche 1 bis 4, **dadurch gekennzeichnet, dass** die Hochdruckturbine (9) des Hochdruckturboladers (1) mit einer turbinenseitigen Bypassleitung (19) versehen ist, in der ein Steuerventil (7) angeordnet ist.

6. Turboladeranordnung nach einem der Ansprüche 1 bis 5, **dadurch gekennzeichnet, dass** die Hochdruckturbine (9) des Hochdruckturboladers (1) mit variabler Geometrie ausgeführt ist.

7. Turboladeranordnung nach einem der Ansprüche 1 bis 5, **dadurch gekennzeichnet, dass** die Niederdruckturbine (13) des Niederdruckturboladers (2) mit variabler Geometrie ausgeführt ist.

8. Turboladeranordnung nach einem der Ansprüche 1 bis 5, **dadurch gekennzeichnet, dass** die Hochdruckturbine (9) des Hochdruckturboladers (1)und die Niederdruckturbine (13) des Niederdruckladers (2) mit variabler Geometrie ausgeführt sind.

9. Turboladeranordnung nach Anspruch 1, **dadurch gekennzeichnet, dass** das Ventil (7) zur Steuerung der Bypassleitung (19) der Hochdruckturbine (9) durch einen mittels Unterdruck beaufschlagten Betätigungsmechanismus geregelt wird.

## Claims

1. Multi-stage turbocharger arrangement, in particular for spark-ignition engines (8),
- having a high-pressure turbocharger (1);
- having a low-pressure turbocharger (2);
- having a pre-catalytic converter (5) which is arranged upstream of the low-pressure turbine (13) of the low-pressure turbocharger (2) as viewed in the exhaust gas flow direction (P_{A}); and
- having a main catalytic converter (6) which is connected downstream of the pre-catalytic converter (5),
- the low-pressure turbine (13), which is arranged in an inlet line (17) which is provided with a control valve (4), of the low-pressure turbocharger (2) having a waste-gate arrangement (3) with a bypass line (16) and with a control valve (15) arranged in said bypass line (16),
**characterized in that** the high-pressure turbine (9), which is arranged in an inlet line (18), of the high-pressure turbocharger (1) has a bypass line (19) and a control valve (7) arranged in said bypass line (19), the bypass line (19) branching off from the inlet line (18) upstream of the high-pressure turbine (9) and opening out into the inlet line (18) again upstream of the pre-catalytic converter (5).

2. Turbocharger arrangement according to Claim 1, **characterized in that** the pre-catalytic converter (5) is arranged directly downstream of the high-pressure turbine (9) of the high-pressure turbocharger (1) as viewed in the exhaust gas flow direction (P_{A}).

3. Turbocharger arrangement according to one of Claims 1 or 2, **characterized in that** the main catalytic converter (6) is arranged downstream of the low-pressure turbine (13) of the low-pressure turbocharger (2).

4. Turbocharger arrangement according to one of Claims 1 to 2, **characterized in that** the main catalytic converter (6) is arranged upstream of the low-pressure turbine (13) of the low-pressure turbocharger (2).

5. Turbocharger arrangement according to one of Claims 1 to 4, **characterized in that** the high-pressure turbine (9) of the high-pressure turbocharger (1) is provided with a turbine-side bypass line (19) in which a control valve (7) is arranged.

6. Turbocharger arrangement according to one of Claims 1 to 5, **characterized in that** the high-pressure turbine (9) of the high-pressure turbocharger (1) is designed with variable geometry.

7. Turbocharger arrangement according to one of Claims 1 to 5, **characterized in that** the low-pressure turbine (13) of the low-pressure turbocharger (2) is designed with variable geometry.

8. Turbocharger arrangement according to one of Claims 1 to 5, **characterized in that** the high-pressure turbine (9) of the high-pressure turbocharger (1) and the low-pressure turbine (13) of the low-pressure turbocharger (2) are designed with variable geometry.

9. Turbocharger arrangement according to Claim 1, **characterized in that** the valve (7) is, in order to control the bypass line (19) of the high-pressure turbine (9), regulated by means of an actuating mechanism which is acted on by means of a vacuum.

## Revendications

1. Agencement de turbosoufflante à plusieurs étages, notamment pour moteurs otto (8),
- avec une turbosoufflante haute pression (1) ;
- avec une turbosoufflante basse pression (2) ;
- avec un précatalyseur (5) disposé avant la turbine basse pression (13) de la turbosoufflante basse pression (2), vu dans la direction d'écoulement du gaz d'échappement (P_{A}) ; et
- avec un catalyseur principal (6) qui est monté après le précatalyseur (5),
- la turbine basse pression (13) de la turbosoufflante basse pression (2), disposée dans une conduite d'alimentation (17) pourvue d'une soupape de commande (4) présentant un agencement de wastegate (3) avec une conduite de dérivation (16) et une soupape de commande (15) disposée dedans,
**caractérisé en ce que** la turbine haute pression (9) de la turbosoufflante haute pression (1) disposée dans une conduite d'alimentation (18) présente une conduite de dérivation (19) et une soupape de commande (7) disposée dedans, la conduite de dérivation (19) partant de la conduite d'alimentation (18) avant la turbine haute pression (9) et débouchant à nouveau dans la conduite d'alimentation (18) avant le précatalyseur (5).

2. Agencement de turbosoufflante selon la revendication 1, **caractérisé en ce que** le précatalyseur (5), vu dans la direction d'écoulement du gaz d'échappement (P_{A}), est disposé directement derrière la turbine haute pression (9) de la turbosoufflante haute pression (1).

3. Agencement de turbosoufflante selon l'une quelconque des revendications 1 ou 2, **caractérisé en ce que** le catalyseur principal (6) est disposé derrière la turbine basse pression (13) de la turbosoufflante basse pression (2).

4. Agencement de turbosoufflante selon l'une quelconque des revendications 1 à 2, **caractérisé en ce que** le catalyseur principal (6) est disposé avant la turbine basse pression (13) de la turbosoufflante basse pression (2).

5. Agencement de turbosoufflante selon l'une quelconque des revendications 1 à 4, **caractérisé en ce que** la turbine haute pression (9) de la turbosoufflante haute pression (1) est pourvue d'une conduite de dérivation (19) du côté de la turbine, dans laquelle est disposée une soupape de commande (7).

6. Agencement de turbosoufflante selon l'une quelconque des revendications 1 à 5, **caractérisé en ce que** la turbine haute pression (9) de la turbosoufflante haute pression (1) est réalisée avec une géométrie variable.

7. Agencement de turbosoufflante selon l'une quelconque des revendications 1 à 5, **caractérisé en ce que** la turbine basse pression (13) de la turbosoufflante basse pression (2) est réalisée avec une géométrie variable.

8. Agencement de turbosoufflante selon l'une quelconque des revendications 1 à 5, **caractérisé en ce que** la turbine haute pression (9) de la turbosoufflante haute pression (1) et la turbine basse pression (13) de la turbosoufflante basse pression (2) sont réalisées avec une géométrie variable.

9. Agencement de turbosoufflante selon la revendication 1, **caractérisé en ce que** la soupape (7) pour la commande de la conduite de dérivation (19) de la turbine haute pression (9) est régulée par un mécanisme d'actionnement sollicité au moyen d'une dépression.
